# EUROPEAN PATENT SPECIFICATION

(11) **EP 0 396 907 B1**
(45) Date of publication and mention of the grant of the patent: **14.09.1994**
(21) Application number: 90106511.0
(22) Date of filing: 05.04.1990
(51) Int. Cl.: F16F 9/38, F16F 9/36, F16F 9/02, F16F 9/44, A47B 9/10, A47C 3/30, F15B 15/26, B66F 3/26

(54) **A positioning device**
Positionier-Einrichtung
Dispositif de positionnement

(30) Priority: 07.04.1989 DE 3911245
(43) Date of publication of application: 14.11.1990
(73) Proprietor: Stabilus GmbH, D-56070 Koblenz (DE)
(72) Inventor: Kessler, Jürgen, D-5430 Montabaur 1 (DE); Schuth, Michael, D-5419 Hahn am See (DE)
(74) Representative: Weickmann, Heinrich, Dipl.-Ing.

(56) References cited:
- EP-A- 0 217 013
- DE-B- 1 300 365
- DE-B- 1 750 482
- FR-A- 2 626 332

## Description

### BACKGROUND OF THE INVENTION

Positioning devices like blockable gas springs are used in office furniture, e.g. chairs and tables or in hospital beds, for height adjustment. The conventional positioning devices and more particularly gas springs are provided with an actuating member for releasing the blocking effect and allowing height adjustment. This actuating member is guided within a channel of the piston rod or the cylinder.

When the piece of furniture is subjected to cleaning, aggressive cleaning agents can enter into the gap defined between the actuating member and the channel. This is particularly true, when the actuating member is upwards directed in its working position. It has been found that by the entrance of aggressive media into this gap, corrosion can interfere the actuation of the actuating member.

### STATEMENT OF THE PRIOR ART

DE-OS 25 28 980 and U. S. Patent 4 096 785 show a gas spring in which an actuating member is guided in an axial channel extending through a terminal portion of the cylinder. A gap exists between the actuating member and the channel. Aggressive agents can enter into this gap and can also reach the valve unit provided in a passage, which passage connects the working chambers.

DE-OS 34 19 364 and U.S. Patent 4 632 228 show a hydro-pneumatic gas spring in which an actuating rod is guided within an axial channel of the piston rod. Also in this embodiment, aggressive agents can enter into a gap between the actuating rod and the channel.

From FR-A-2 626 332 a hydraulic shock absorber is known in which an axially outer end portion of a piston rod is connected with an adjacent end portion of a cylinder unit by an axially length-variable bellows member which protects the piston rod section located outside the piston unit.

### OBJECT OF THE INVENTION

The invention relates to a positioning device for furniture comprising a cylinder unit having an axis and two ends and defining a cavity therein, a piston rod member axially extending outwards of said cavity through at least one of said two ends, a piston unit connected with said piston rod member within said cavity and separating two working chambers from each other within said cavity, a working fluid within said working chambers, passage means extending between said working chambers, valve means allocated to said passage means for selectively opening and closing said passage means and an elongate actuating member acting onto said valve means, said actuating member extending through an axially directed channel outwards of a terminal portion of one of said piston rod member and said cylinder unit towards the surrounding atmosphere of said positioning device.

It is the object of the present invention to prevent the access of aggressive agents into the gap between an actuating member and a channel guiding this actuating member.

A further object of the invention is to prevent such access in a most simple and economic way.

This object is achieved in that protective means are provided to prevent aggressive cleaning agents from entering the gap defined between said actuating member and said channel, said protective means consisting of sealing means adjacent the exit of said actuating member out of said channel at said terminal portion.

By the protective means, the access of aggressive media into the gap between the actuating member and the channel is prevented. The sealing means are not necessarily gas-tight, but they can be gas-tight, if the access of aggressive gaseous media is to be expected, for example vapours developped by aggressive cleaning agents. Normally, the protective means are such that they do not withstand to pressure differences. Under extreme conditions, however, it is also possible to use protective means which can withstand pressure differences.

According to a first embodiment of the invention, the protective sealing means comprise a length-variable tubular protection member sealingly engaging the terminal portion of the cylinder unit or the piston rod member on the one hand and the actuating member on the other hand.

This tubular protection member may comprise a bellows member of synthetic plastic or rubber material.

The tubular protection member may have a terminal bulge portion adjacent at least one of its axial ends, such that this terminal bulge portion can sealingly engage a respective one of said terminal portions and said actuating member. The tubular protection member may be in sealing engagement with the actuating member through a cap member fastened to an outer end of the actuating member. The cap member is preferably made from a material different from the material of the tubular protection member, because the cap member must withstand considerable actuating forces. The cap member may be integral with the actuating member or may be made as a separate part and may be fixed to the actuating member, e. g. the cap member may be provided with a bore into which the actuating member is pressed. The end face of the cap member may be spherical for engagement with a further actuating element.

If the tubular protection member is provided with a terminal bulge portion, this terminal bulge portion may engage into an annular groove of one of said terminal portions and said actuating member.

Another possibility of sealing engagement consists in that the tubular protection member sealingly engages at least one of said terminal portions and said actuating member by sealing face means substantially perpendicular to the axis of the positioning device, e. g. the tubular protection member may engage by a first sealing face an axially directed terminal face of the terminal portion and by a second sealing face an axially directed engagement face of a disc member connected with an outer end portion of the actuating member. In such an embodiment, the tubular protection member may be a tubular resilient foam material body.

According to a further embodiment of the invention, a sealing ring unit is provided adjacent the exit of the channel. This sealing ring unit is in stationary sealing engagement with the respective terminal portion and is in sliding sealing engagement with an external circumferential face of the actuating member. The sealing ring unit may be received by a radially inwards open annular groove of the respective terminal portion. The annular groove may be open or closed in axially outward direction. In case of a closed groove, the sealing ring unit may comprise an O-ring.

According to a further embodiment, the sealing ring unit may be fixed to the respective terminal portion and have a plurality of radially inwardly directed bulge faces, said bulge faces slidingly engaging an external circumferential face of the actuating member.

According to a still further embodiment, a sealing pot member may be sealingly fixed to an outer end of said actuating member. This sealing pot member comprises a radially inwardly directed sealing lip sealingly engaging an external circumferential face of the respective terminal portion. The sealing pot member may have a bottom fixed to an axially directed terminal face of the actuating member.

Preferably, the invention is applicable to embodiments in which the actuating member extends through a channel within the piston rod member.

If it is desired that the piston rod member is under a prestress with respect to the cylinder unit, the working fluid within the working chambers may be under superatmospheric pressure.

In case of a gas spring, the working fluid is a pressurized gas.

The protective means may be in series arrangement with primary sealing means preventing said working fluid within said working chambers to escape through said gap.

The various features of the invention are discussed especially in the accompanying claims which form a part of the disclosure.

For the better understanding of the invention, its working advantages and specific effects reference is now made to the accompanying drawings and the description, in which preferred forms of embodiment of the invention are discussed.

### BRIEF DESCRIPTION OF THE DRAWINGS

The invention is represented in the accompanying drawings in which
- Fig. 1: shows a gas spring of the present invention partly in longitudinal section;
- Fig. 2: shows the terminal portion of the piston rod of Fig. 1 in longitudinal section;
- Figs. 3 - 8: show modified embodiments of the terminal portion of the piston rod for use in a gas spring as shown in Fig. 1;
- Fig. 9: shows a longitudinal section through a hydropneumatic spring in which the actuating member is guided within a channel of the piston rod member and
- Fig. 10: shows a longitudinal section through a gas spring in which the actuating member is guided within a channel of a terminal plug of the cylinder unit.

### DETAILED DESCRIPTION OF THE PREFERRED EMBODIMENTS

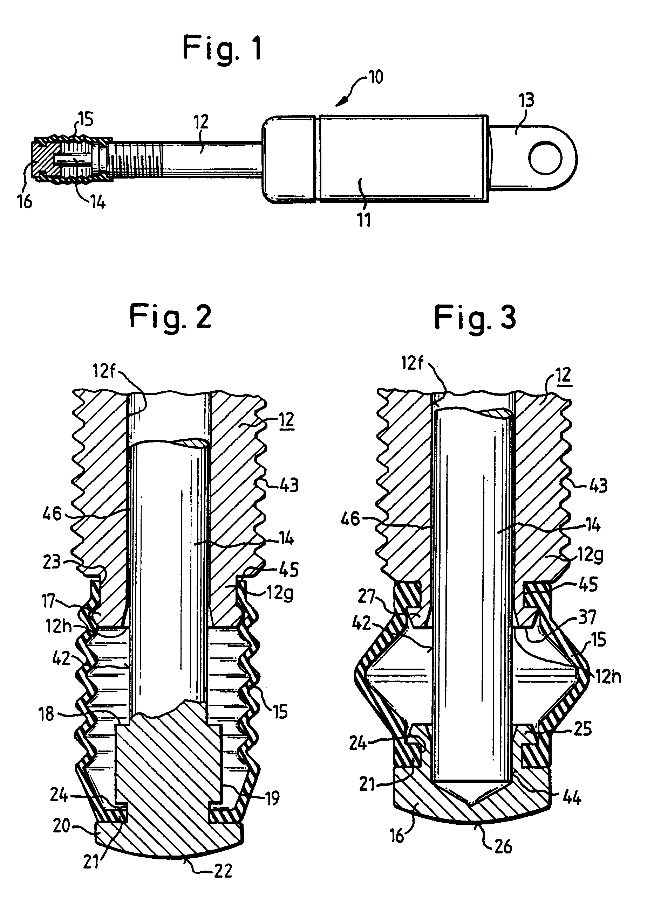

The pneumatic spring 10 shown in Fig. 1 consists essentially of a tubular cylinder 11 which is provided at one end with a fixing lug 13; at the end opposite the lug 13, a piston rod 12 is capable of being pushed into and withdrawn from the tubular cylinder 11. The piston rod 12 is provided with locking means.

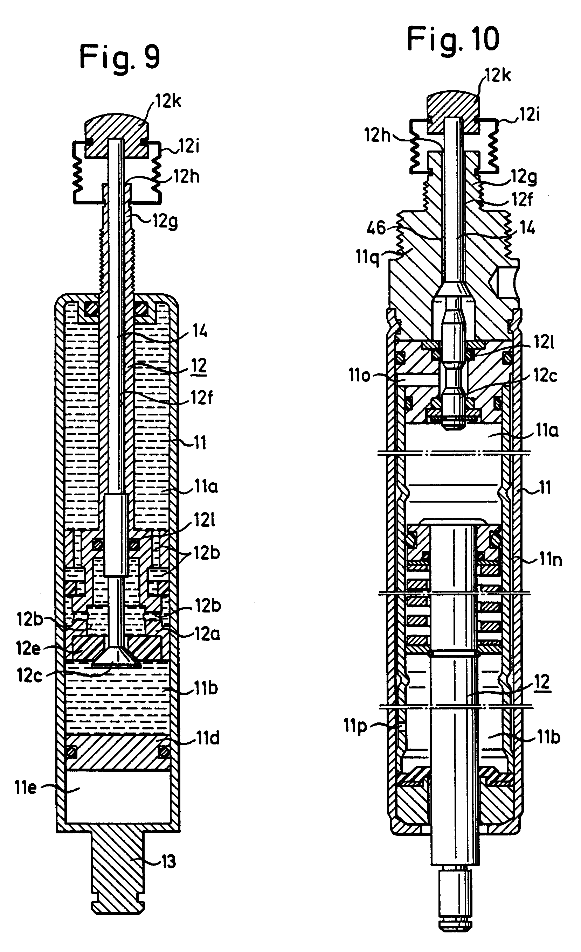

It is referred now to Fig. 9. One recognizes again the cylinder 11 and the piston rod 12. The piston rod 12 is connected with a piston unit 12a. The piston unit 12a separates the cavity within the cylinder 11 into two working chambers 11a and 11b. The working chambers 11a and 11b are filled with a liquid. A passage 12b extends between the working chambers 11a and 11b. This passage 12b is closed by a valve member 12c. A floating partition 11d separates the working chamber 11b from a gas chamber 11e containing a pressurized gas. The valve member 12c is under normal operational conditions pressed against a valve seat 12c by the pressure of the fluid. The valve member 12c is in operative connection with an elongate actuating member 14 which is guided within a channel 12f extending along the piston rod member 12. The actuating member 14 extends beyond the outer end of the piston rod member 12. The terminal portion of the piston rod member 12 is designated by 12g. The exit 12h of the channel 12f is closed by protective sealing means 12i which are in sealing engagement with both the terminal portion 12g and a cap 12k fixed to the outer end of the actuating member 14. When the valve member 12c is in engagement with the valve seat 12e, the axial position of the piston rod member 12 is fixed. For adjusting the axial position of the piston rod member 12 with respect to the cylinder 11, the actuating member 14 is urged downwards against the fluid pressure. Then the piston rod member 12 can be pushed inwards or can move outwards under the pressure of the fluid.

The gap defined between the channel 12f and the actuating member 14 is closed by the protective sealing means 12i so that no aggressive media can enter into this gap.

It is to be noted that the protective sealing means 12i are not charged by the pressure of the working fluid within the working chambers 11a and 11b due to the existence of the sealing ring 12l.

For a more detailed description of the protective sealing means 12i, it is referred now to Fig. 2.

A hose-like bellows device 15 is disposed around the actuating member 14. As Fig. 2 shows, the bellows device 15 is provided at one end 45 with a bellows stop 23 and is connected to the piston rod 12 in sealing-tight fashion at a retaining bead 17. At its other end, the bellows device 15 is provided with a retaining bulge 21 and is held in sealing-tight fashion in a retaining groove 24 on the actuating member 14.

The actuating member 14 is at its outer end provided with an enlarged outside diameter at 19 which forms an abutment 18. The actuating member 14 is guided in the piston rod 12 in the channel 12f and can be pushed into the piston rod 12 as far as the abutment 18 allows. The outer free end of the actuating member 14 consists of a spherically constructed thrust head 20, the thrust head edge 22 of which serves as an outer abutment for the retaining bulge 21.

As Fig. 3 shows, the bellows device 15 can at its outer end also be occluded by a protective cap 16. The protective cap 16 has axially within it an encircling back taper which serves as a bellows device support 25. This support 25 forms a retaining groove 24 into which the retaining bulge 21 of the bellows device 15 can be inserted.

The outer surface of the protective cap 16 forms a spherical thrust surface 26.

The free end of the actuating member 14 is pressed into the protective cap 16. For this purpose, the protective cap 16 is provided on its inside with an axially extending protective cap bore 44 into which the free end of the actuating member 14 is inserted. In this way, it is possible to use hitherto conventional push rods.

For fixing the bellows device 15 on the piston rod 12, this latter is at its outer free edge 37 provided with a back taper which serves as a bellows device support 27. Behind this bellows device support 27 it is possible to insert the axially inner free end 45 of the bellows device 15 which is then retained by inherent tension. For mounting on - not shown - vertically adjustable furniture, e. g. hospital beds, the piston rod 12 is provided with a screw-thread 43 in the region of its outer free end 37.

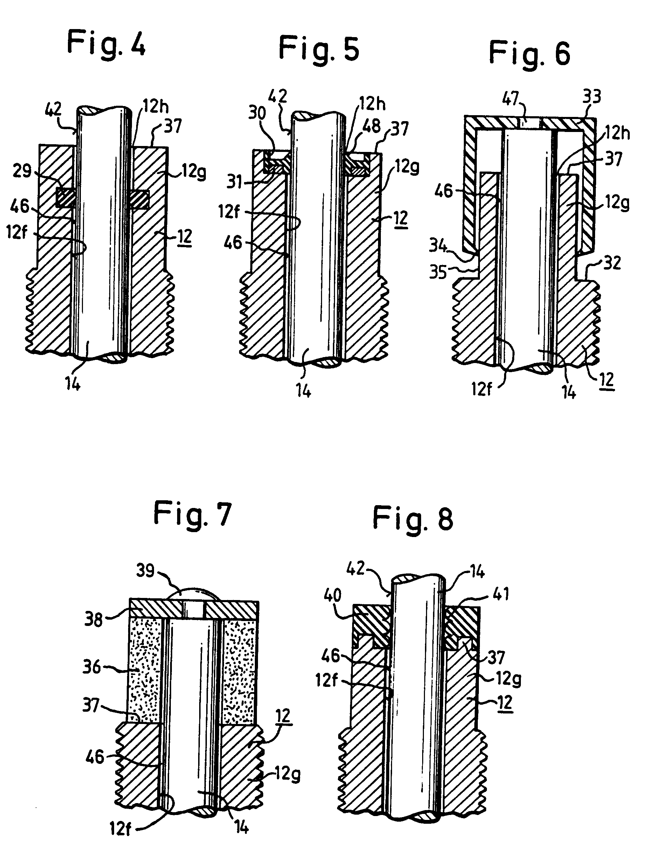

In the case of the simplified embodiment shown in Fig. 4, there is in the region of the exit end 37 of the piston rod 12 an O-ring 29 which is inserted into the piston rod 12. This O-ring 29 seals the gap 46 between the channel 12f and the actuating member 14. Corrosion-promoting media are thus prevented from penetrating in the channel 12f or from passing along the actuating member 14 and entering the interior of the piston rod 12.

In the case of the embodiment of Fig. 5, the piston rod 12 has associated with it, in the region of its outer free end 37, a sealing unit 30 with a sealing lip 48 bearing on the external circumferential surface 42 of the actuating member 14. This sealing unit 30 comprises a packing insert 31 designed to prevent the sealing lip 48 being drawn into the gap 46 between the actuating member 14 and the channel 12f.

In Fig. 6, the piston rod 12 is in the region of its outer free end 37 provided with a reduced outside diameter which forms an external circumferential sealing surface 35. The sealing surface 35 extends as far as an axially inwardly offset step 32. Placed on this sealing surface 35 is a pot 33 provided with a sealing lip 34. The pot 33 is fixed at 47 onto the outer free end of the actuating member 14 by screwing or riveting. The sealing lip 34 points radially inwardly and runs in sealing-tight manner on the sealing surface 35. The gap 46 between the actuating member 14 and the channel 12f is sealed outwardly and safeguarded against the penetration of corrosive media.

With the embodiment shown in Fig. 7, there is associated with the outer free end of the piston rod 12 a foam cushion 36. For retaining the foam cushioning member 36, the outer free end of the actuating member 14 is provided with a disc 38 secured by a fixing means 39, e. g. a rivet or a bolt with a head. The foam cushioning member 36 fills the free space between the outer end 37 of the piston rod 12 and the axially outer disc 38 fixed on the free end of the actuating member 14 so that corrosive media cannot penetrate the gap 46 between the actuating member 14 and the channel 12f and cause corrosion.

In the case of the embodiment shown in Fig. 8, a multi-bead ring 40 is associated with the outer free end 37 of the piston rod 12. The multi-bead ring 40 in the example of embodiment illustrated comprises three sealing beads 41 which bear on the external circumferential surface 42 of the actuating member 14 and so seal the gap 46 between the channel 12f and the actuating member 14.

In the embodiment of Fig. 10, the working chambers 11a and 11b are interconnected by an annular space 11n and radial bores 11o and 11p. The annular space 11n and the bores 11o,11p form a passage which can be opened by an axial movement of a valve member 12c. The valve member 12c is actuated by an actuating member 14. This actuating member 14 is guided in a channel 12f of a terminal plug 11q. A cap 12k is provided on the actuating member 14. Sealing means 12i are provided between the cap 12k and the terminal portion 12g of the plug 11q. So, the gap 46 is again closed. The piston rod 12 extends through the lower end of the cylinder unit 11. The working chambers 11a and 11b are filled with pressurized gas. Further details of this gas spring are described in DE-OS 25 28 980 and U. S. Patent 4,096,785. It is to be noted that the sealing ring 12l prevents pressurized gas to escape up to the sealing means 12i.

The reference numerals in the claims serve only for facilitation of understanding and are not to be understood as a limitation.

## Claims

1. A positioning device for furniture comprising a cylinder unit (11) having an axis and two ends and defining a cavity (11a, 11b) therein, a piston rod member (12) axially extending outwards of said cavity (11a, 11b) through at least one of said two ends, a piston unit (12a) connected with said piston rod member (12) within said cavity (11a, 11b) and separating two working chambers (11a, 11b) from each other within said cavity (11a, 11b), a working fluid within said working chambers (11a, 11b), passage means (12b) extending between said working chambers (11a, 11b), valve means (12c, 12e) allocated to said passage means (12b) for selectively opening and closing said passage means (12b) and an elongate actuating member (14) acting onto said valve means (12c, 12e),
said actuating member (14) extending through an axially directed channel (12f) outwards of a terminal portion (12g) of one of said piston rod member (12) and said cylinder unit (11) towards the surrounding atmosphere of said positioning device, characterized in that protective means (15) are provided to prevent aggressive cleaning agents from entering the gap defined between said actuating member (14) and said channel (12f), said protective means (15) consisting of sealing means (15) adjacent the exit of said actuating member (14) out of said channel (12f) at said terminal portion (12g).

2. A positioning device as set forth in claim 1, said protective means (15) comprising a length-variable tubular protection member (15) sealingly engaging said terminal portion (12g) and said actuating member (14).

3. A positioning device as set forth in claim 2, said tubular protection member (15) comprising a bellows member.

4. A positioning device as set forth in one of claims 1 - 3, said tubular protection member (15) having a terminal bulge portion (21) adjacent at least one of its axial ends, said terminal bulge portion (21) sealingly engaging a respective one of said terminal portion (12g) and said actuating member (14).

5. A positioning device as set forth in one of claims 2 - 4, said tubular protection member (12i) sealingly engaging said actuating member (14) through a cap member (12k) fastened to an outer end of said actuating member (14).

6. A positioning device as set forth in claim 4 or 5, said terminal bulge portion (21) engaging an annular groove (24) of one of said terminal portion (12g) and said actuating member (14).

7. A positioning device as set forth in claim 2 or 3, said tubular protection member (36) sealingly engaging at least one of said terminal portion (12g) and said actuating member (14) by sealing face means (37,38) substantially perpendicular to said axis.

8. A positioning device as set forth in claim 7, said tubular protection member (36) engaging by a first sealing face an axially directed terminal face (37) of said terminal portion (12g) and by a second sealing face an axially directed engagement face of a disc member (38) connected with an outer end portion of said actuating member (14).

9. A positioning device as set forth in claim 7 or 8, said tubular protection member (36) being a tubular resilient foam material body.

10. A positioning device as set forth in claim 1, a sealing ring unit (29) being provided adjacent the exit of said channel (12f), said sealing unit (29) being in stationary sealing engagement with said terminal portion (12g) and being in sliding sealing engagement with an external circumferential face (42) of said actuating member (14).

11. A positioning device as set forth in claim 10, said sealing ring unit (29) being received by a radially inwards open annular groove of said terminal portion (12g).

12. A positioning device as set forth in claim 11, said annular groove being open in axially outward direction.

13. A positioning device as set forth in claim 11, said groove being closed in axial direction by two oppositely directed side faces.

14. A positioning device as set forth in claim 11, said sealing ring unit (29) comprising an O-ring.

15. A positioning device as set forth in claim 10, said sealing ring unit (40) being fixed to said terminal portion (12g) and having a plurality of radially inwardly directed bulge faces (41), said bulge faces (41) slidingly engaging an external circumferential face (42) of said actuating member (14).

16. A positioning device as set forth in claim 1, a sealing pot member (33) being sealingly fixed to an outer end of said actuating member (14), said sealing pot member (33) comprising a radially inwardly directed sealing lip (34) sealingly engaging an external circumferential face (35) of said terminal portion (12g).

17. A positioning device as set forth in claim 16, said sealing pot member (33) having a bottom fixed to an axially directed terminal face of said actuating member (14).

18. A positioning device as set forth in one of claims 1 - 17, said actuating member (14) extending through a channel (12f) within said piston rod member (12).

19. A positioning device as set forth in one of claims 1 - 18, said working fluid within said working chamber (11a,11b) being under superatmospheric pressure.

20. A positioning device as set forth in one of claims 1 - 19, said working fluid being a pressurized gas.

21. A positioning device as set forth in claim 5, said cap member (16) having a fastening bore receiving an outer end portion of said actuating member (14).

22. A positioning device as set forth in claim 5 or 21, said cap member (16) having a substantially spherical engagement face (26).

23. A positioning device as set forth in one of claims 1 - 22, said protective means (15) being provided in series arrangement with primary sealing means (12 l) preventing said working fluid within said working chambers (11a, 11b) to escape through said gap.

## Patentansprüche

1. Positionierungseinrichtung für Möbel, umfassend eine Zylindereinheit (11) mit einer Achse und zwei Enden, in welcher ein Hohlraum (11a, 11b) begrenzt ist, ein sich durch wenigstens eines der zwei Enden axial aus dem Hohlraum (11a, 11b) heraus erstreckendes Kolbenstangenelement (12), eine innerhalb des Hohlraums (11a, 11b) mit dem Kolbenstangenelement (12) verbundene und innerhalb des Hohlraums (11a, 11b) zwei Arbeitskammern (11a, 11b) voneinander trennende Kolbeneinheit (12a), ein Arbeitsfluid innerhalb der Arbeitskammern (11a, 11b), zwischen den Arbeitskammern (11a, 11b) verlaufende Passagenmittel (12b), den Passagenmitteln (12b) zugeordnete Ventilmittel (12c, 12e) zum wahlweisen Öffnen und Schließen der Passagenmittel (12b) sowie ein auf die Ventilmittel (12c, 12e) wirkendes, längliches Betätigungselement (14), wobei sich das Betätigungselement (14) durch einen axial gerichteten Kanal (12f) hindurch von einem endständigen Abschnitt (12g) des KolbenstangenelementS (12) oder der Zylindereinheit (11) nach außen hin in Richtung auf die umgebende Atmosphäre der Positionierungseinrichtung erstreckt,
dadurch gekennzeichnet,
daß Schutzmittel (15) vorgesehen sind, um zu verhindern, daß aggressive Reinigungsmittel in den zwischen dem Betätigungselement (14) und dem Kanal (12f) begrenzten Zwischenraum eindringen, wobei die Schutzmittel (15) aus Dichtungsmitteln (15) bestehen, welche dem Ausgang des Betätigungselements (14) aus dem Kanal (12f) an dem endständigen Abschnitt (12g) benachbart sind.

2. Positionierungseinrichtung nach Anspruch 1, wobei die Schutzmittel (15) ein längenveränderliches, rohrförmiges Schutzelement (15) umfassen, welches mit dem endständigen Abschnitt (12g) und dem Betätigungselement (14) in Dichteingriff steht.

3. Positionierungseinrichtung nach Anspruch 2, wobei das rohrförmige Schutzelement (15) ein Balgteil umfaßt.

4. Positionierungseinrichtung nach einem der Ansprüche 1 - 3, wobei das rohrförmige Schutzelement (15) wenigstens einem seiner axialen Enden benachbart einen endständigen Vorsprungsabschnitt (21) aufweist, wobei dieser endständige Vorsprungsabschnitt (21) mit dem endständigen Abschnitt (12g) oder dem Betätigungselement (14) in Dichteingriff steht.

5. Positionierungseinrichtung nach einem der Ansprüche 2 - 4, wobei das rohrförmige Schutzelement (12i) mit dem Betätigungselement (14) über ein an einem äußeren Ende des Betätigungselements (14) befestigtes Kappenelement (12k) in Dichteingriff steht.

6. Positionierungseinrichtung nach Anspruch 4 oder 5, wobei der endständige Vorsprungsabschnitt (21) in eine Ringnut (24) des endständigen Abschnitts (12g) oder des Betätigungselements (14) eingreift.

7. Positionierungseinrichtung nach Anspruch 2 oder 3, wobei das rohrförmige Schutzelement (36) durch zur Achse im wesentlichen orthogonale Dichtflächenmittel (37, 38) mit dem endständigen Abschnitt (12g) oder/und dem Betätigungselement (14) in Dichteingriff steht.

8. Positionierungseinrichtung nach Anspruch 7, wobei das rohrförmige Schutzelement (36) durch eine erste Dichtfläche mit einer axial gerichteten Endfläche (37) des endständigen Abschnitts (12g) in Eingriff steht und durch eine zweite Dichtfläche mit einer axial gerichteten Eingriffsfläche eines Scheibenteils (38) in Eingriff steht, welches mit einem äußeren Endabschnitt des Betätigungselements (14) verbunden ist.

9. Positionierungseinrichtung nach Anspruch 7 oder 8, wobei das rohrförmige Schutzelement (36) ein rohrförmiger, elastischer Schaummaterialkörper ist.

10. Positionierungseinrichtung nach Anspruch 1, wobei eine Dichtungsringeinheit (29) dem Ausgang des Kanals (12f) benachbart vorgesehen ist, wobei diese Dichtungseinheit (29) mit dem endständigen Abschnitt (12g) in stationärem Dichteingriff steht und mit einer äußeren Umfangsfläche (42) des Betätigungselements (14) in gleitendem Dichteingriff steht.

11. Positionierungseinrichtung nach Anspruch 10, wobei die Dichtungsringeinheit (29) von einer nach radial innen offenen Ringnut des endständigen Abschnitts (12g) aufgenommen ist.

12. Positionierungseinrichtung nach Anspruch 11, wobei die Ringnut nach axial außen hin offen ist.

13. Positionierungseinrichtung nach Anspruch 11, wobei die Nut in axialer Richtung durch zwei entgegengesetzt gerichtete Seitenflächen verschlossen ist.

14. Positionierungseinrichtung nach Anspruch 11, wobei die Dichtungsringeinheit (29) einen O-Ring umfaßt.

15. Positionierungseinrichtung nach Anspruch 10, wobei die Dichtungsringeinheit (40) an dem endständigen Abschnitt (12g) befestigt ist und eine Mehrzahl radial einwärts gerichteter Vorsprungsflächen (41) aufweist, wobei die Vorsprungsflächen (41) mit einer äußeren Umfangsfläche (42) des Betätigungselements (14) gleitend in Eingriff stehen.

16. Positionierungseinrichtung nach Anspruch 1, wobei ein Dichtungstopfelement (33) an einem äußeren Ende des Betätigungselements (14) dichtend befestigt ist, wobei das Dichtungstopfelement (33) eine radial einwärts gerichtete Dichtlippe (34) umfaßt, welche mit einer äußeren Umfangsfläche (35) des endständigen Abschnitts (12g) in Dichteingriff steht.

17. Positionierungseinrichtung nach Anspruch 16, wobei das Dichtungstopfelement (33) einen an einer axial gerichteten Endfläche des Betätigungselements (14) befestigten Boden aufweist.

18. Positionierungseinrichtung nach einem der Ansprüche 1 - 17, wobei sich das Betätigungselement (14) durch einen Kanal (12f) innerhalb des Kolbenstangenelements (12) hindurch erstreckt.

19. Positionierungseinrichtung nach einem der Ansprüche 1 - 18, wobei das Arbeitsfluid innerhalb der Arbeitskammer (11a, 11b) unter über dem Umgebungsdruck liegendem Druck steht.

20. Positionierungseinrichtung nach einem der Ansprüche 1 - 19, wobei das Arbeitsfluid ein Druckgas ist.

21. Positionierungseinrichtung nach Anspruch 5, wobei das Kappenelement (16) eine Befestigungsbohrung aufweist, welche einen äußeren Endabschnitt des Betätigungselements (14) aufnimmt.

22. Positionierungseinrichtung nach Anspruch 5 oder 21, wobei das Kappenelement (16) eine im wesentlichen sphärische Eingriffsfläche (26) aufweist.

23. Positionierungseinrichtung nach einem der Ansprüche 1 - 22, wobei die Schutzmittel (15) in Reihenanordnung mit Primärdichtungsmitteln (12l) vorgesehen sind, welche verhindern, daß das Arbeitsfluid innerhalb der Arbeitskammern (11a, 11b) durch den Zwischenraum entweicht.

## Revendications

1. Dispositif de positionnement pour mobilier, comprenant un cylindre (11) possédant un axe et deux extrémités et définissant intérieurement une cavité (11a, 11b), une tige de piston (12) s'étendant axialement vers l'extérieur de cette cavité (11a, 11b) à travers au moins l'une de ces deux extrémités, un piston (12a) relié à la tige de piston (12) à l'intérieur de cette cavité (11a, 11b) et séparant deux chambres de travail (11a, 11b) l'une de l'autre à l'intérieur de la cavité (11a, 11b), un fluide de travail présent à l'intérieur de ces chambres de travail (11a, 11b), un passage (12b) s'étendant entre les chambres de travail (11a, 11b), des moyens formant soupape (12c, 12e) associés au passage (12b) afin d'ouvrir et de fermer, au choix, le passage (12b) et un élément d'actionnement allongé (14) agissant sur les moyens formant soupape (12c, 12e),
l'élément d'actionnement (14) s'étendant à travers un canal orienté axialement (12f) à l'extérieur d'une partie terminale (12g) d'un élément choisi parmi la tige de piston (12) et le cylindre (11) en direction de l'atmosphère environnante du dispositif de positionnement, caractérisé en ce que des moyens protecteurs (15) sont prévus pour empêcher des agents de nettoyage agressifs de pénétrer dans l'espace défini entre l'élément d'actionnement (14) et le canal (12f), les moyens protecteurs (15) étant constitués de moyens d'étanchéité disposés de façon adjacente du point où l'élément d'actionnement (14) sort du canal (12f), au niveau de la partie terminale (12g).

2. Dispositif de positionnement selon la revendication 1, caractérisé en ce que les moyens protecteurs (15) comprennent un élément protecteur tubulaire (15) variable en longueur coopérant de façon étanche avec la partie terminale (12g) et l'élément d'actionnement (14).

3. Dispositif de positionnement selon la revendication 2, caractérisé en ce que l'élément protecteur tubulaire (15) comprend un soufflet.

4. Dispositif de positionnement selon l'une des revendications 1 à 3, caractérisé en ce que l'élément protecteur tubulaire (15) possède une partie terminale bombée (21) adjacente à au moins l'une de ses extrémités axiales, la partie terminale bombée (21) coopérant de façon étanche avec respectivement l'un des éléments choisis parmi la partie terminale (12g) et l'élément d'actionnement (14).

5. Dispositif de positionnement selon l'une des revendications 2 à 4, caractérisé en ce que l'élément protecteur tubulaire (12i) coopère de façon étanche avec l'élément d'actionnement (14) grâce à un capuchon (12k) fixé sur une extrémité externe de l'élément d'actionnement (14).

6. Dispositif de positionnement selon l'une des revendications 4 ou 5, caractérisé en ce que la partie terminale bombée (21) coopère avec une rainure annulaire (24) présente sur l'un des éléments choisis parmi la partie terminale (12g) et l'élément d'actionnement (14).

7. Dispositif de positionnement selon l'une des revendications 2 ou 3, caractérisé en ce que l'élément protecteur tubulaire (36) coopère de façon étanche avec au moins l'un des éléments choisis parmi la partie terminale (12g) et l'élément d'actionnement (14), grâce à des moyens d'étanchéité facials (37, 38) sensiblement perpendiculaires à l'axe.

8. Dispositif de positionnement selon la revendication 7, caractérisé en ce que l'élément protecteur tubulaire (36) coopère, au moyen d'une première face d'étanchéité, avec une face terminale (37), orientée axialement, de la partie terminale (12g) et, au moyen d'une deuxième face d'étanchéité, avec une face de contact, orientée axialement, d'un disque (38) relié à une extrémité externe de l'élément d'actionnement (14).

9. Dispositif de positionnement selon la revendication 7 ou 8, caractérisé en ce que l'élément protecteur tubulaire (36) est un corps tubulaire en mousse élastique.

10. Dispositif de positionnement selon la revendication 1, caractérisé en ce qu'un anneau d'étanchéité (29) est prévu de façon adjacente à la sortie du canal (12f), l'anneau d'étanchéité (29) coopérant de façon étanche et fixe avec la partie terminale (12g) et coopérant de façon étanche et mobile avec une face circonférentielle externe (42) de l'élément d'actionnement (14).

11. Dispositif de positionnement selon la revendication 10, caractérisé en ce que l'anneau d'étanchéité (29) est logé dans une rainure annulaire ouverte radialement vers l'intérieur de la partie terminale (12g).

12. Dispositif de positionnement selon la revendication 11, caractérisé en ce que la rainure annulaire est ouverte axialement vers l'extérieur.

13. Dispositif de positionnement selon la revendication 11, caractérisé en ce que la rainure est fermée dans la direction axiale par deux faces latérales orientées de façon opposée.

14. Dispositif de positionnement selon la revendication 11, caractérisé en ce que l'anneau d'étanchéité (29) comprend un joint torique.

15. Dispositif de positionnement selon la revendication 10, caractérisé en ce que l'anneau d'étanchéité (40) est fixé à la partie terminale (12g) et présente une pluralité de faces bombées (41) orientées radialement vers l'intérieur, ces faces bombées (41) étant en contact coulissant avec une face circonférentielle externe (42) de l'élément d'actionnement (14).

16. Dispositif de positionnement selon la revendication 1, caractérisé en ce qu'un couvercle d'étanchéité (33) est fixé de façon étanche à une extrémité externe de l'élément d'actionnement (14), le couvercle d'étanchéité (33) comprenant une lèvre d'étanchéité (34) orientée radialement vers l'intérieur, coopérant de façon étanche avec une face circonférentielle externe (35) de la partie terminale (12g).

17. Dispositif de positionnement selon la revendication 16, caractérisé en ce que le couvercle d'étanchéité (33) possède un fond fixé à une face terminale, orientée axialement, de l'élément d'actionnement (14).

18. Dispositif de positionnement selon l'une des revendications 1 à 17, caractérisé en ce que l'élément d'actionnement (14) s'étend à travers un canal (12f) présent à l'intérieur de la tige de piston (12).

19. Dispositif de positionnement selon l'une des revendications 1 à 18, caractérisé en ce que le fluide de travail, à l'intérieur de la chambre de travail (11a, 11b), se trouve à une pression supérieure à la pression atmosphérique.

20. Dispositif de positionnement selon l'une des revendications 1 à 19, caractérisé en ce que le fluide de travail est un gaz sous pression.

21. Dispositif de positionnement selon la revendication 5, caractérisé en ce que le bouchon (16) possède un perçage de fixation recevant une partie terminale externe de l'élément d'actionnement (14).

22. Dispositif de positionnement selon la revendication 5 ou 21, caractérisé en ce que le bouchon (16) possède une face de contact (26) sensiblement sphérique.

23. Dispositif de positionnement selon l'une des revendications 1 à 22, caractérisé en ce que les moyens protecteurs (15) sont disposés en série avec des moyens d'étanchéité primaires (12 l) empêchant le fluide de travail présent à l'intérieur des chambres de travail (11a, 11b) de s'échapper par l'espace.
